# DEMANDE DE BREVET EUROPEEN

(11) **EP 0 947 768 A1**
(43) Date de publication de la demande: **06.10.1999**
(21) Numéro de dépôt: 99400653.4
(22) Date de dépôt: 17.03.1999
(51) Int. Cl.: F23C 7/02, F23L 7/00, F23C 5/00

(54) **Procédé de combustion par injections séparées du combustible et du comburant**

(30) Priorité: 02.04.1998 FR 9804116
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Duboudin, Thierry, 94300 Vincennes (FR); Labegorre, Bernard, 75015 Paris (FR)
(74) Mandataire: Vesin, Jacques

(57) **Abrégé**

Procédé de combustion dans un four comportant une sole dans laquelle est placée une charge à chauffer, ainsi qu'une voûte située au-dessus de la charge, procédé dans lequel on injecte séparément le fluide combustible et le fluide comburant entre la surface de la charge et la voûte, caractérisé en ce que le comburant et le combustible sont injectés à deux niveaux différents et que le rapport des impulsions (m2.v2,/m1.v1) des fluides combustible et comburant est supérieur ou égale à environ 1/3, m₁ étant le débit massique du fluide supérieur et v₁ sa vitesse d'injection dans le four, m₂ étant le débit massique du fluide inférieur et v₂ sa vitesse d'injection dans le four.

## Description

La présente invention concerne un procédé de combustion par injections séparées d'au moins un combustible et d'au moins un comburant, ainsi que l'utilisation de ce procédé pour le contrôle et/ou le réglage de la position d'une flamme, lorsqu'on utilise des injections séparées des dits comburants et combustibles.

Procédé de combustion dans un four comportant une sole dans laquelle est placée une charge à chauffer, ainsi qu'une voûte située au-dessus de la charge, dans laquelle on injecte séparément un premier fluide et un deuxième fluide, capables de réaliser une combustion eutre eux, les injections de ces fluides étant réalisées entre la surface de la charge et la voûte, le premier fluide étant soit un fluide combustible, soit un fluide comburant, tandis que le second fluide est soit un fluide comburant, soit un fluide combustible.

De nombreux documents de l'art antérieur, tels que les brevets US 4,863,371, US 4,946,382, US 4,988,285 et US 5,076,779, décrivent des méthodes de combustion d'un combustible à l'aide d'un oxydant tel que l'oxygène ou de l'air enrichi en oxygène, dans lesquelles la quantité d'oxydes d'azote (NOₓ) engendrés est réduite.

D'autres publications telles que par exemple les brevets US 4,541,796, US 5,302,112, et US 5,643,348, décrivent des brûleurs ayant des géométries différentes, correspondant notamment à des injections séparées de combustibles et de comburants, les différences entre ces brûleurs, étant essentiellement constitués par le nombre d'injections ou d'injecteurs, la distance entre les injecteurs, leurs positions relatives etc...

Ces différents procédés ainsi que l'utilisation de ces différents brûleurs dans un four dans lequel une charge doit être chauffée ou fondue grâce à l'apport d'énergie de ces brûleurs, comportent tous cependant l'inconvénient que lorsque l'on met en place les brûleurs ou que l'on cherche à faire fonctionner les dits procédés, il peut arriver que les injections séparées de combustibles et de comburants, plus particulièrement lorsque le combustible est injecté au dessus du comburant, tendent à engendrer une ascension du combustible en direction de la voûte, ce qui engendre une combustion, c'est à dire une flamme chaude à proximité de la voûte. Un tel fonctionnement peut être particulièrement dangereux puisqu'il peut conduire à la destruction de la voûte du four.

A l'heure actuelle, se pose donc le problème, lorsqu'on utilise des injections séparées de comburants et de combustibles, du contrôle de ces injections, de manière à éviter l' ascension du mélange combustible-comburant, et de préférence au moins du combustible, en direction de la voûte. Le but de ce contrôle est de maintenir les gaz sensiblement aux environs de la hauteur à laquelle ils sont injectés dans le four, sans ascension substantielle de ces comburants et/ou combustibles vers la voûte. Par ascension substantielle, on entend une ascension qui amènerait au voisinage de la voute des gaz dont la température est trop élevée et/ou des gaz réducteurs (ou trop réducteurs), ce qui dans les deux cas, pourrait conduire à un endommagement des réfractaires de la voute.

Afin de résoudre le problème posé, la première hypothèse venant à l'esprit, consiste à supposer que la gravité à une influence sur la position de la flamme. En particulier le gaz naturel, le plus léger des composants gazeux présents dans le four lorsqu'on utilise un combustible au gaz naturel, pourrait avoir tendance à se diriger vers la voûte du four et serait donc à l'origine des problèmes ainsi rencontrés.

Les essais qui ont été réalisés par la Demanderesse, ont montré que la gravité n'avait pas d'influence sensible sur les caractéristiques de la flamme, pour des conditions d'injections sensiblement horizontales, c'est à dire sensiblement parallèles à la surface de la charge à fondre.

Après avoir conduit des recherches approfondies, la Demanderesse a mis en évidence l'importance des vitesses respectives des jets de comburants et de combustibles en ce qui concerne l'orientation de la flamme vers le haut (en direction de la voûte) ou vers le bas (c'est à dire en direction de la charge).

La présente invention est basée sur la mise en évidence de l'importance du rapport entre l'impulsion du fluide bas et l'impulsion du fluide haut, c'est à dire le débit de quantité de mouvement (Qm.v) du fluide dont le point d'injection est le plus proche de la surface de la charge à chauffer, et le débit de quantité de mouvement (Qm.v) du fluide dont le point d'injection est le plus proche de la surface de la voûte, c'est à dire dans un plan horizontal situé au-dessus du plan horizontal correspondant à l'injection du fluide bas. Par débit de quantité de mouvement, on entend le produit du débit massique par la vitesse. On utilisera alternativement les termes « débit de quantité de mouvement» ou « impulsion » pour désigner la même quantité Qm.v.

Le procédé selon l'invention est caractérisé en ce que le premier fluide est injecté à un premier niveau dans le four et le second fluide est injecté à un second niveau dans le four, en ce que le premier niveau est situé en dessous du second niveau par rapport à la charge à chauffer et en ce que l'impulsion du fluide injecté au second niveau est inférieure ou égale à environ 3 fois l'impulsion du fluide injecté au premier niveau.

De préférence, le procédé de combustion selon l'invention est caractérisé en ce que l'impulsion du fluide injecté au second niveau est inférieure ou égale à environ 1,5 fois celle du fluide injecté au premier niveau.

Lorsque l'injecteur inférieur est constitué d'une pluralité d'injecteurs inférieurs. L'impulsion correspond à la somme des impulsions de chaque injecteur.

De même lorsque l'injecteur supérieur comporte plusieurs injecteurs, l'impulsion correspond à la somme des impulsions de chaque injecteur.

Dans le cas où l'on a plus de deux injecteurs, notamment un injecteur inférieur injectant un premier fluide, un injecteur médian injectant un second fluide et un injecteur supérieur injectant le premier fluide, l'impulsion du jet supérieur doit rester inférieure à trois fois l'impulsion du jet inférieur, si l'impulsion du jet médian est inférieure à environ trois fois l'impulsion la plus importante des jets supérieur et inférieur (au delà, c'est le jet médian qui pilote la position de la flamme)

Sans vouloir être liés par une quelconque théorie, les inventeurs pensent que l'invention peut être expliquée de la manière suivante:

Lorsque l'on injecte un jet unique dans une enceinte confinée, on créé deux recirculations de gaz, l'une sous l'injection, et l'autre au dessus de l'injection, recirculations qui se produisent entre le niveau de la charge et l'injection d'une part, et la voûte du four et l'injection d'autre part. Si le jet se trouve plus proche de l'une de ces deux surfaces, les recirculations ne sont pas de même intensité et le jet peut être dévié de sa direction initiale: par exemple, si l'injection se trouve en dessous du milieu de la paroi latérale par rapport à la surface de la charge et à la voûte, c'est à dire plus proche de la surface de la charge que de la voûte, la recirculation du côté de la sole sera beaucoup plus importante que la recirculation du côté de la voûte, ce qui entraîne un flux de gaz plus important en direction de la sole que de la voûte. C'est à dire d'une manière générale, dans la direction de la recirculation de plus forte intensité. Dans le cas de deux jets proches disposés l'un au dessus de l'autre sensiblement, chaque jet créé au voisinage de la paroi la plus proche, une recirculation dont l'intensité dépend au premier lieu de la vitesse du jet et dans une moindre mesure de sa position par rapport à la paroi latérale. Suivant les intensités respectives de ces de recirculations, on peut alors dévier les jets vers l'une ou l'autre des parois (voûte ou sole).

L'invention sera mieux comprise à l'aide des exemples de réalisation ci-joint, présentés conjointement avec les figures qui représentent.

La figure 1: une courbe représentant la position de température maximum (en mètre) par rapport au niveau auquel se trouve le brûleur (« burner level ») en fonction de la vitesse d'injection de l'oxygène ou du gaz comburant en général, exprimée en mètres par secondes. (Le terme « burner level » est le niveau du plan situé à égale distance des injecteurs haut et bas.)

La figure 2: une courbe représentant le rapport des impulsions des injections basse et haute, en fonction de la position de température maximale de la flamme.

### EXEMPLE 1:

Dans un four de longueur 5 mètres et de hauteur 1.5 mètre, on dispose un injecteur bas pour l'injection d'un premier fluide, et un injecteur haut pour l'injection d'un second fluide, situés dans le même plan verticale, dont les axes sont espacés d'une distance 1=0.25m. La distance entre surface du bain à réchauffer (par exemple un bain de verre) et le point équidistant des axes des injecteurs est égale à 0.5 m.

Dans l'injecteur supérieur, un premier fluide qui est de l'oxygène est injecté à une vitesse de 15 mètres par seconde, tandis que dans l'injecteur inférieur un second fluide qui est du gaz naturel est injecté à une vitesse de 60 mètres par seconde.

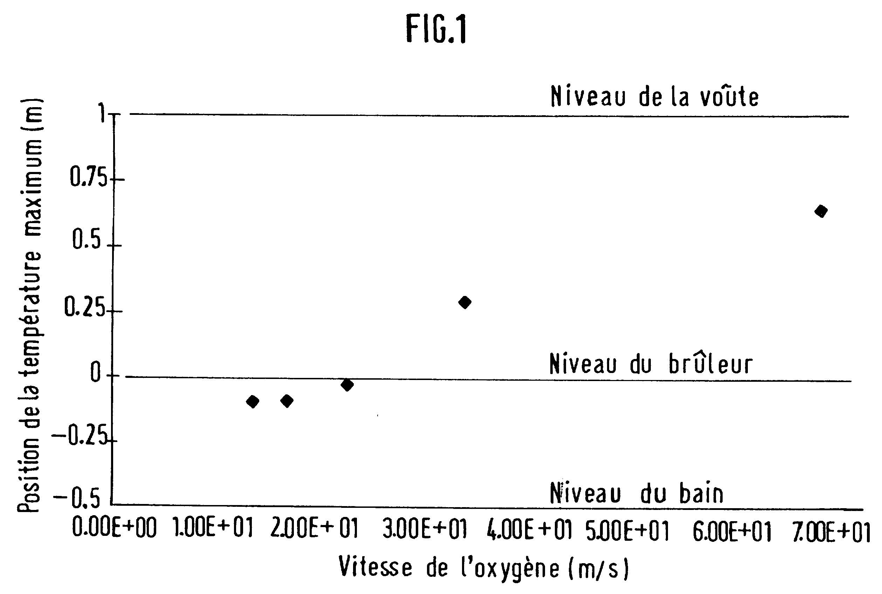

En faisant varier la vitesse d'injection de l'oxygène; entre environ 13 et 70 mètres par seconde, on repère la position de la flamme ainsi créée par les deux injecteurs, en reperant la position du maximum de température par rapport à l'axe du brûleur. Les résultats sont représentés sur la figure 1, sur laquelle il apparaît clairement que si la vitesse de l'oxygène, et d'une manière plus générale du comburant, c'est à dire du fluide supérieur, augmente, alors, petit à petit, la température la plus élevée est située de plus en plus haut par rapport au niveau 0 du brûleur, et se retrouve, par exemple dans le cas présent, pour une vitesse de 70 mètres par seconde de l'oxygène, situé à environ 0.70 mètres au-dessus du niveau du brûleur, c'est à dire environ 1.20 mètres au-dessus du niveau du bain.

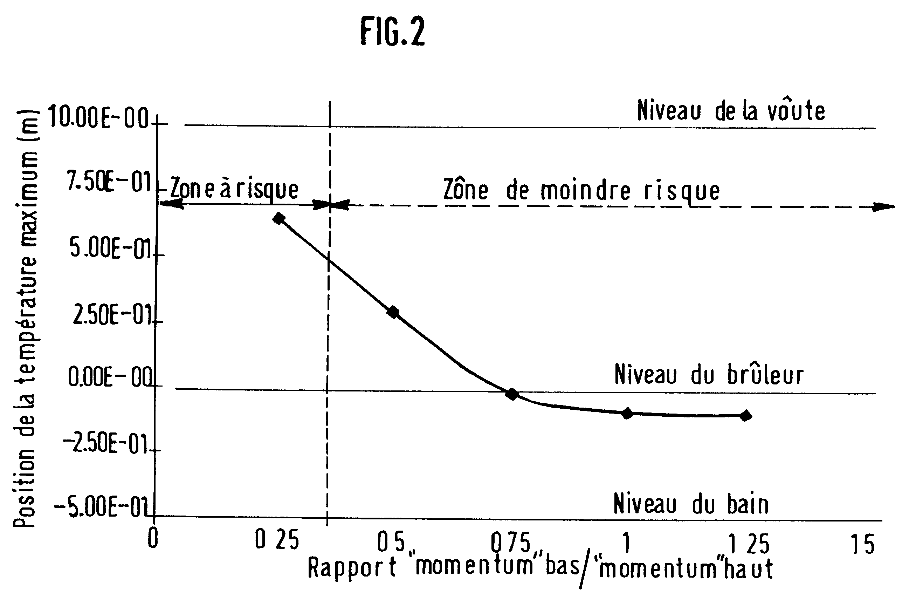

En faisant varier ensuite les quantités de mouvement des gaz injectés dans l'injecteur bas et dans l'injecteur haut, en particulier en faisant varier leurs vitesses respectives tout en gardant le même débit massique, on mesure comme précédemment la position du maximum de température de la flamme par rapport à l'axe du brûleur et on voit d'après les résultats exposés sur la figure 2 que lorsque ce rapport des quantités de mouvement est inférieur à environ 0.3, on se trouve dans une zone située au-delà de 0.5 mètre au-dessus de l'axe du brûleur c'est à dire environ 1 mètre au-dessus du niveau du bain de matériau à chauffer, (par exemple du verre); ce qui, d'une manière générale, constitue une valeur maximale d'emplacement de température maximale si l'on veut dans un fonctionnement continu du four, éviter de détruire la voûte. De préférence, il convient de faire varier ce rapport des quantités de mouvement de manière à rapprocher de préférence l'emplacement de la température maximale de la flamme de l'axe du brûleur (que ce soit au dessus ou en dessous de celui-ci). On constate donc que de préférence, le rapport des quantités de mouvements doit être supérieur à 0.3 et plus préférentiellement supérieur à environ à 0.6.

### EXEMPLE 2:

On a reproduit les expériences ci-dessus avec différents combustibles tels que du propane, du butane, du gaz de pétrole liquéfié (« GPL »), fioul (léger ou lourd). et l'on a constaté que l'on obtenait sensiblement les mêmes résultats que ceux illustrés sur les courbes précédentes, c'est à dire que l'effet obtenu de localisation de la température maximale de la flamme à une valeur satisfaisante ne dépend pas des fluides utilisés, que ce soit le combustible ou le comburant, mais dépend simplement des rapports des quantités de mouvement comme explicité ci-avant.

De même on constate que l'injection d'oxygène impur, c'est à dire d'un comburant contenant au moins 20% d'oxygène et de préférence plus de 35% O2 et de façon encore plus préférentielle plus de 88% vol d'oxygène ne modifiait pas les résultats obtenus, quelque soit l'autre gaz (ou les autres gaz) présent avec l'oxygène.

## Revendications

1. Procédé de combustion dans un four comportant une sole dans laquelle est placée une charge à chauffer, ainsi qu'une voûte située au-dessus de la charge, dans laquelle on injecte séparément un premier fluide et un deuxième fluide, capables de réaliser une combustion eutre eux, les injections de ces fluides étant réalisées entre la surface de la charge et la voûte, le premier fluide étant soit un fluide combustible, soit un fluide comburant, tandis que le second fluide est soit un fluide comburant, soit un fluide combustible, caractérisé en ce que le premier fluide est injecté à un premier niveau dans le four et le second fluide est injecté à un second niveau dans le four, en ce que le premier niveau est situé en dessous du second niveau par rapport à la charge à chauffer et en ce que l'impulsion du fluide injecté au second niveau est inférieure ou égale à environ 3 fois l'impulsion du fluide injecté au premier niveau.

2. Procédé de combustion selon la revendication 1, caractérisé en ce que l'impulsion du fluide injecté au second niveau est inférieure ou égale à environ 1,5 fois celle du fluide injecté au premier niveau.

3. Procédé selon l'une des revendications 1 ou 2, caractérisé en ce que le premier fluide est de l'oxygène pur ou industriellement pur, ayant une concentration en oxygène supérieure à 88% en volume environ.

4. Procédé selon l'une revendications 1 à 3, caractérisé en ce que le second fluide est choisi parmi le gaz naturel, le butane, le propane, le gaz de pétrole liquéfié et/ou le fioul.

5. Utilisation du procédé selon l'une des revendications 1 à 4 pour le contrôle et/ou le réglage dans un four de la position d'une flamme créée par des injections séparées de comburant et de combustible.
